# EUROPÄISCHE PATENTSCHRIFT

(11) **EP 1 058 467 B1**
(45) Veröffentlichungstag und Bekanntmachung des Hinweises auf die Patenterteilung: **19.07.2006**
(21) Anmeldenummer: 00111325.7
(22) Anmeldetag: 26.05.2000
(51) Int. Cl.: H04Q 7/32

(54) **Verfahren zum Betrieb von zwei SIM-Karten in ein Mobiltelefon**
Method for using two SIM cards in a mobile telephone
Procédé pour utiliser deux cartes SIM dans un téléphone mobile

(30) Priorität: 01.06.1999 DE 19925254
(43) Veröffentlichungstag der Anmeldung: 06.12.2000
(73) Patentinhaber: Nokia Corporation, 02150 Espoo (FI)
(72) Erfinder: Müller, Ulrich, 89079 Ulm (DE)
(74) Vertreter: Becker Kurig Straus

(56) Entgegenhaltungen:
- EP-A- 0 586 081
- EP-A- 0 762 715
- WO-A-92/19078
- WO-A-94/28686
- DE-A- 19 742 796
- US-A- 5 875 404
- MOHAMMED ZAID: "PERSONAL MOBILITY IN PCS" IEEE PERSONAL COMMUNICATIONS, IEEE COMMUNICATIONS SOCIETY, US, Bd. 1, Nr. 4, 1. Oktober 1994 (1994-10-01), Seiten 12-16, XP000478092 ISSN: 1070-9916

## Beschreibung

### Stand der Technik

Gemäß dem Stand der Technik ist es bekannt, dass zur Nutzung von GSM-Telefonen eine sogenannte SIM-Karte notwendig ist, die den Zugriff auf die entsprechenden Netze ermöglicht. Neben anderen Funktionsbereichen ist jede SIM-Karte auch mit einem EEProm ausgestattet, welches alle nutzerrelevanten und individuellen Informationen enthält. So sind beispielsweise in einem solchen EEProm die sogenannte IMSI (International Mobil Subscriber Identifiacation), die PIN und die Super PIN, die internationale Zugangsberechtigung, die Prioritätsklasse und die Teilnehmerinformation gespeichert.

Will sich ein Teilnehmer ein Gespräch führen und stellt zu diesem Zweck sein Mobiltelefon an, wird er zunächst aufgefordert, seine PIN einzugeben. Stimmen die eingegebene PIN und die auf der SIM-Karte gespeicherte PIN überein, wird über die IMSI festgestellt, ob der Teilnehmer ordnungsgemäß aktiviert ist und welche Zusatzdienste er nutzen darf. Außerdem identifiziert sich der Teilnehmer mit der SIM-Karte über die dort gespeicherte Funktelefonnummer [mobil subscriber ISDN number (MSISDN)] im Netz. Mit Hilfe der sog. Authentifikation stellt das Netz dann sicher, dass es sich tatsächlich um eine autorisierten GSM-Teilnehmer handelt und bucht in nach erfolgreicher Prüfung ins Netz ein. Das Authentifikationsverfahren beruht auf einem Vergleich von Rechenergebnissen, die parallel in der SIM-Karte und dem Netz ermittelt werden. Grundlage für die Rechenergebnisse ist ein teilnehmergeeigneter Schlüssel, der in der SIM-Karte gespeichert ist. Dieser individuelle Schlüssel ist auch netzseitig bekannt. Beide Seiten verarbeiten gleiche Eingabegrößen. Bei Gleichheit der Ergebnisse ist die Teilnehmerauthentizität gewährleistet. Jede Authentifikation führt zu einer neuen Berechnung unter Anwendung einer neuen Eingabegröße, wodurch Fehlgebühren durch Manipulationen ausgeschlossen werden. Aufkommende Rufe werden nur dem "richtigen" Empfänger vermittelt, da auch hier das Authentifikationsverfahren angewandt wird.

Neben dieser allgemein bekannten Anwendung ist es auch bekannt, Transceiver mit einer Mehrzahl von SIM-Karten zu versehen. Eine solche Realisierung ist beispielsweise in der am 26.11.1998 hinterlegten Schrift GB-A-2 345 177 näher erläutert. Sinn und Zweck der Verwendung mehrerer SIM-Karten ist es, dass bei Ausfall einer jeweils aktiven (=ins Netz eingebuchten) SIM-Karte der Telefonbetrieb mit einer anderen SIM-Karte fortgesetzt werden kann. Aus US-A-5 875 404 ist der Betrieb eines Funktelefons mit zwei SIM-Karten ebenfalls bekannt, wobei eine gemeinsame Rufnummer beiden SIM-Karten zugeordnet ist.

Einer der Hauptanwendungsbereiche für solche Anwendungen liegt im Kraftfahrzeug. Dort gehört ein Autotelefon schon fast zur Serienausstattung. Daneben drängen immer mehr sogenannte Navigationssysteme auf den Markt, die dem Fahrer durch entsprechende Hinweise beispielsweise die Route zu seinem Fahrziel angegeben. Da die Aktualität solcher Navigationssysteme sehr zu Wünschen übrig läßt, werden in letzter Zeit Anordnungen angegeben, die aktuelle Änderungen (wie zum Beispiel Baustellen oder Staus) berücksichtigen. Dazu werden die entsprechenden Änderungen über einen Transceiver übertragen. Auch kann diese Transceiver dazu genutzt werden, um die Position des Fahrzeugs beispielsweise eines verunfallten oder gestohlenen Kraftfahrzeugs zu übermitteln. Die Nutzung dieser Funktionen setzt aber voraus, dass das Autotelefon im Netz eingebucht ist. Dies muss aber nicht notwendig der Fall sein. So kann beispielsweise ein Nutzer ein nicht fest im Kraftfahrzeug installiertes (Auto-) Telefon zu einem normalen Mobilfunktelefon machen, indem er es aus der Halterung im Kraftfahrzeug entfernt und es beispielsweise in seinem Büro nutzt. Ist das Autotelefon hingegen fest im Kraftfahrzeug eingebaut und will der Nutzer auch außerhalb seines Kraftfahrzeugs unter seiner Autotelefonnummer erreichbar sein, besteht die Möglichkeit zur Nutzung der SIM-Karte des Autotelefons im normalen Mobilfunktelefon. Verfährt ein Nutzer in der ein oder anderen Weise, ist die Aktualisierung des Navigationssystems sowie die Übertragung von Fahrzeugdaten nur dann möglich, wenn der Nutzer die SIM-Karte wieder ins fest im Kraftfahrzeug installierte Autotelefon einsetzt bzw. das als normales Mobiltelefon genutzte Autotelefon wieder in die Halterung im Kraftfahrzeug schiebt, so dass dieses beispielsweise wieder mit der Navigationeinrichtung in Verbindung treten kann. Unterläßt jedoch der Nutzer bei einem fest im Kraftfahrzeug installierten Autotelefon die Einfügung der SIM-Karte, wird entsprechend einer Lösung vorgeschlagen, dass dann eine automatische Anmeldung über eine andere, beispielsweise in der Navigationseinheit fest installierten SIM-Karte erfolgt, wenn das Kraftfahrzeug beispielsweise. Dieses Verfahren stellt sicher, dass auch bei nicht eingelegter bzw. eingebuchter (Haupt-) SIM-Karte bestimmte Dienste über die fest im Fahrzeug installierte (Neben-) SIM-Karte verfügbar bleiben. Letzteres ist insbesondere auch dann von Vorteil, wenn bei einem Unfall die eingebuchter (Haupt-)SIM-Karte aus der Halterung geschleudert wird, denn auch in diesem Fall ist ein Notbetrieb über die fest eingebaute und daher weniger anfällige (Neben)-SIM-Karte noch möglich.

Aber auch diese Betriebsweise ist nicht ganz unproblematisch. Durch eine alternierende Betriebsweise zwischen beispielsweise einer (Haupt-) SIM-Karte und einer (Neben-) SIM-Karte kann wegen der Bereitstellung bloß eines Transceivers entweder nur die (Haupt-) SIM-Karte oder die (Neben-) SIM-Karte für den Datenaustausch genutzt werden. So ist es beispielsweise bei aktiver (Haupt-) SIM-Karte nicht möglich, eine Aktualisierung des Navigationssystems durchzuführen. Auch können in diesem Zustand keine Positionsdaten vom Kraftfahrzeug abgesetzt werden. Dies kann beispielsweise von Autodieben ausgenutzt werden, indem diese beispielsweise durch Verwendung einer beliebigen (Haupt-) SIM-Karte und der damit verbundenen Sperre der (Neben-) SIM-Karte die Position des Kraftfahrzeugs nicht ermittelt werden kann, obwohl das Kraftfahrzeug aufgrund seiner Komponenten prinzipiell geortet werden kann.

Daher liegt der Erfindung die Aufgabe zugrunde ein Verfahren anzugeben, bei welchem trotz einer aktiver SIM-Karte Dienste, welche mit einer anderen - derzeit nicht aktiven - SIM-Karte verbunden ist, erhalten bleiben.

### Darstellung der Erfindung

Diese Aufgabe wird mit den in den Ansprüchen 1 und 9 angegebenen Merkmalen gelöst. Eine vorteilhafte Ausbildung der Erfindung ist der abhängigen Ansprüchen entnehmbar.

Kann gemäß den Ansprüchen 1 und 9 eine ins Netz einbuchte SIM-Karte auf Informationen von der oder den übrigen nicht eingebuchten SIM-Karten zugreifen bzw. nutzen, bleiben die über die nicht eingebuchten SIM-Karten zugänglichen Dienste verfügbar, indem beispielsweise bestimmte Daten, die sonst durch nicht eingebuchten SIM-Karte genutzt werden, an die einbuchte SIM-Karte zur Abarbeitung übergeben werden.

Auch ist die Abfrage von Zuständen bzw. die Aktualisierung durch einen Provider einer nicht eingebuchten SIM-Karten möglich, wenn gemäß der abhängigen Ansprüchen an den Provider der nicht eingebuchten SIM-Karte die Rufnummer der einbuchten SIM-Karte übertragen wird. In diesem Fall kann der Provider problemlos zur Gewährleistung der Funktionalität seines Dienstes die Rufnummer der einbuchten SIM-Karte nutzen.

### Kurze Darstellung der Figuren

Es zeigen:
- Fig. 1: ein Kraftfahrzeug mit zwei SIM-Ports (schematisch),
- Fig. 2: eine weitere Darstellung gemäß Fig. 1 und
- Fig. 3: ein Flussdiagramm

### Wege zum Ausführen der Erfindung

Die Erfindung soll nun anhand der Figuren näher erläutert werden.

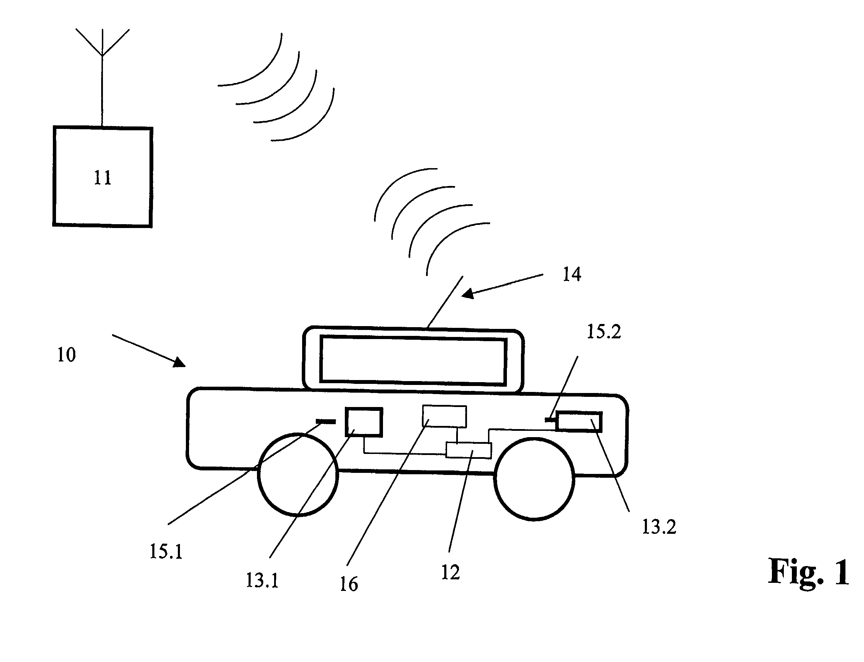

Das in Figur 1 gezeigte Kraftfahrzeug 10 ist zur Kommunikation mit einer Gegenstelle 11 mit einen Transceiver 12, zwei SIM-Ports 13.1, 13.2 und einer Antenne 14 versehen. Dabei ist der Transceiver 12 mit der Antenne 14 verbunden (nicht dargestellt).

In den SIM-Port 13.2 ist eine SIM-Karte 15.2 eingesetzt. Diese SIM-Karte 15.2 dient zum Verbindungsaufbau zwischen einem Provider, welcher beispielsweise für die Aktualisierung eines im Kraftfahrzeug 10 eingebauten Navigationssystems 16 zuständig ist, und dem im Kraftfahrzeug 10 vorhandenen und mit dem Navigationssystems 16 in Verbindung stehenden Transceiver 12. Ob dabei diese SIM-Karte 15.2 auswechselbar oder fest mit dem SIM-Port 13.2 verbunden ist, ist für die Funktionsweise der Erfindung ohne Bedeutung. Da aber die SIM-Karte 15.2 vorliegend zur Aktualisierung des Navigationssystems 16 verwendet wird, ist sie aus Gründen der ständigen Verfügbarkeit fest im SIM-Port 13.2. eingebaut.

In den SIM-Port 13.1, welcher vorliegend im Handapparat einer fest im Kraftfahrzeug 10 installierten Autotelefonanlage (alles nicht gezeigt) angeordnet ist, ist keine SIM-Karte 15.1 eingeschoben. Dies ist dadurch angedeutet das die SIM-Karte 15.1 einen Abstand zum SIM-Port 13.1 einhält.

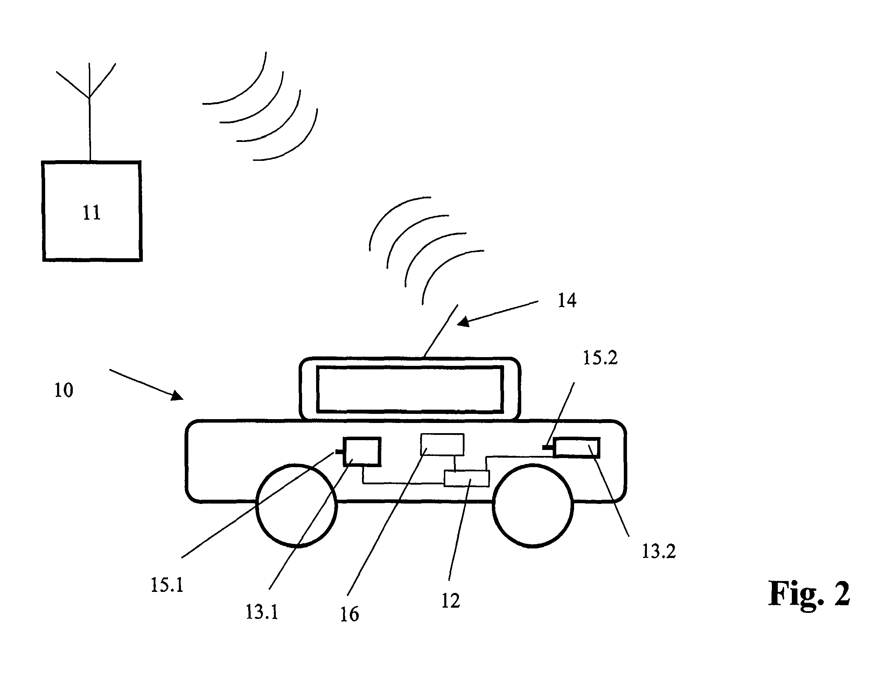

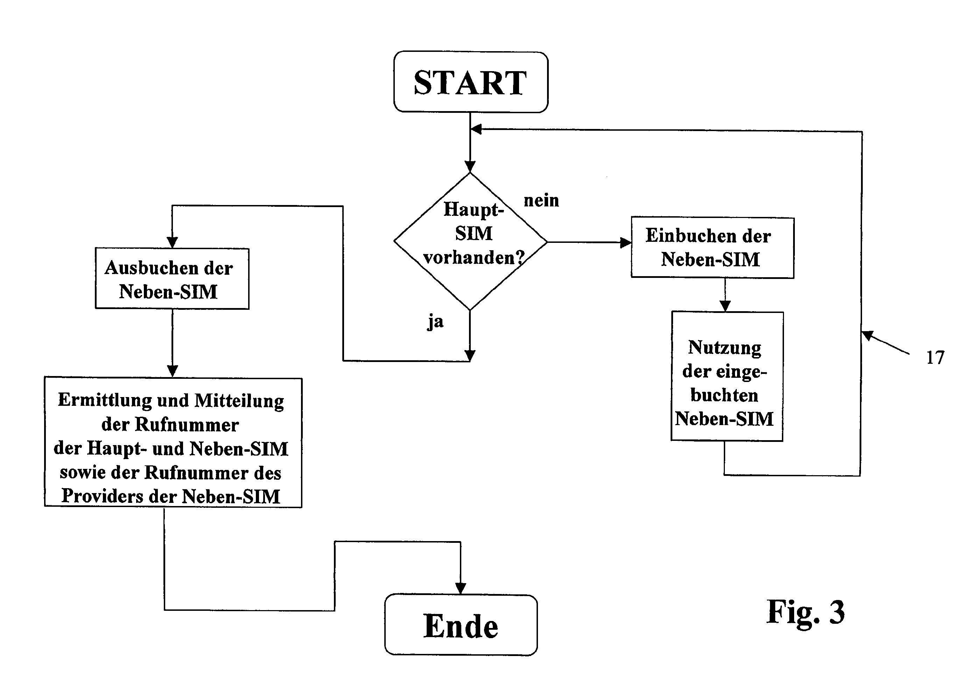

Der jeweilige Belegungszustand der verschiedenen SIM-Ports 13.1, 13.2 wird mittels einer Routine überwacht. Eine solche Routine ist in dem in Fig. 3 gezeigten Flussdiagramm näher gezeigt. Beispielsweise wird diese Routine immer dann gestartet, wenn das Kraftfahrzeug 10 in Betrieb genommen wird. Dann wird in einem ersten Schritt geprüft, ob die Haupt-SIM-Karte, welche im Zusammenhang mit den Figuren 1 und 2 als SIM-Karte 15.1 bezeichnet ist, in den SIM-Port 13.1 eingeschoben und ins Netz eingebucht ist. Ist dies wie im Ausführungsbeispiel gemäß Fig. 1 nicht der Fall, wird die Neben-SIM-Karte, welche im Zusammenhang mit den Figuren 1 und 2 auch als SIM-Karte 15.2 benannt wird, sofort ins Netz eingebucht. Hierdurch wird sichergestellt, dass in jedem Fall über die SIM-Karte 15.2 eine Verbindung zum Provider besteht, womit beispielsweise Aktualisierungen jederzeit empfangen oder Notfallmeldungen und Standortdaten abgesetzt werden können.

Auch kann der Ablauf so modifiziert sein, dass die Neben-SIM-Karte (15.2) ständig eingebucht ist, sofern keine Haupt-SIM-Karte (15.1) aktiv ist.

Durch den Linienzug 17 ist angedeutet, dass die eben erörterte Routine in bestimmten Zeitintervallen erneut abläuft. Auch kann in einem anderen - nicht weiter dargestellten - Ausführungsbeispiel die Routine durch ein äußeres Ereignis, etwa einen Unfall des Kraftfahrzeugs 10 ausgelöst werden. Da im Gegensatz zur mehr oder minder festen Verbindung der Neben-SIM-Karte (15.2) mit dem Kraftfahrzeug 10 die Haupt-SIM-Karte (15.1) wegen ihrer leichten Entfernbarkeit aus dem SIM-Port 13.1 nach einem Unfall eher geringere Funktionalitätsaussichten hat, ist es für die Kommunikation mit dem Kraftfahrzeug 10 und die rasche Einleitung von Hilfsmaßnahmen wesentlich, dass nicht nur auf den intervallmäßigen Ablauf der Routine vertraut wird, sondern in diesen Fällen ein sofortiger Routineablauf gestartet wird.

Die Darstellung gemäß Fig. 2 unterscheidet sich von der Darstellung gemäß Fig. 1 lediglich dadurch, dass dort auch die SIM-Karte 15.1 in den SIM-Port 13.1 eingeschoben und im Netz eingebucht ist und die im SIM-Port 13.2 befindliche SIM-Karte 15.2 nicht mehr im Netz eingebucht ist. Wegen des Vorhandenseins nur eines Transceivers 12 wird in dieser Situation sichergestellt, dass der Nutzer über die Haupt-SIM-Karte (15.1) jederzeit Telefongespräche empfangen und absetzen kann.

Wird während der Routine eine in Fig. 2 Haupt-SIM-Karte (15.1) als vorhanden, d.h. als im Netz eingebucht ermittelt, wird zunächst eine im Netz eingebuchte Neben-SIM-Karte (15.2) ausgebucht. Das Ausbuchen der Neben-SIM-Karte (15.2) entfällt natürlich dann, wenn diese, etwa beim Starten des Kraftfahrzeugs gar nicht eingebucht war. Um die Dienste, die der Provider der Neben-SIM-Karte (15.2) anbietet, auch bei aktiver Haupt-SIM-Karte (15.1) nutzen zu können, wird dann die auf der Haupt-SIM-Karte (15.1) gespeicherte Rufnummer, unter welcher ein Kontakt zum Kraftfahrzeug 10 aufgebaut werden kann, ermittelt und unter Nutzung der Haupt-SIM-Karte (15.1) an den Provider der Neben-SIM-Karte 15.2 übermittelt. Im Detail läuft dies so ab, dass bei Feststellung einer aktiven Haupt-SIM-Karte (15.1) zunächst die auf der Neben-SIM-Karte (15.2) gespeicherten Rufnummern, mit denen der Verbindungsaufbau vom Kraftfahrzeug 10 zum Provider und umgekehrt hergestellt wird, ermittelt werden. Dann wird unter Verwendung der ermittelten Rufnummer des Providers mittels der Haupt-SIM-Karte (15.1) eine Verbindung zum Provider hergestellt und dem Provider die Rufnummer der Neben-SIM-Karte (15.2) und der Haupt-SIM-Karte (15.1) mitgeteilt. Anhand dieser Informationen ist der Provider in der Lage, etwa eine Aktualisierung des Navigationssystems 16 durchzuführen, denn durch die dann dem Provider bekannte Rufnummer der Haupt-SIM-Karte (15.1) ist es diesem möglich, die Rufnummer der Haupt-SIM-Karte (15.1) gezielt zur Aktualisierung einzusetzen.

In gleicher Weise wie der Empfang von Daten durch Nutzung der Haupt-SIM-Karte (15.1) ist auch eine Absetzung von Daten möglich. Ist beispielsweise das Kraftfahrzeug 10 mit einer GPS-Einheit (nicht gezeigt) versehen und werden bei aktiver Neben-SIM-Karte (15.2) die jeweiligen Standortdaten über diese Kartenverbindung an den Provider übermittelt, kann - da bei nicht aktiver Neben-SIM-Karte (15.2) immer die Rufnummer zum Provider ermittelt wurde - diese - ermittelte- Rufnummer von der Haupt-SIM-Karte (15.1) zum Rufbau bzw. zur Übertragung der vom Kraftfahrzeug 10 an den Provider zu übertragenden Daten genutzt werden.

## Patentansprüche

1. Verfahren zum Betreiben einer Kommunikationsanordnung, die einen Transceiver (12) aufweist und mit zumindest zwei SIM-Karten (15.1, 15.2) betreibbar ist, wobei die Kommunikationsanordnung mittels einer ersten SIM-Karte (15.1), die einem ersten Provider zugeordnet ist, in ein Netz eingebucht ist und die weiteren SIM-Karten (15.2) weiteren Providern zugeordnet sind,
***gekennzeichnet durch***
Übermitteln von verbindungsrelevanten Informationen der SIM-Karten (15.1, 15.2) an zumindest einen der weiteren Provider, wobei **dadurch** Dienste, die von dem zumindest einen der weiteren Provider angeboten werden, für die mittels der ersten SIM-Karte (15.1) eingebuchte Kommunikationsanordnung verfügbar gemacht werden.

2. Verfahren gemäß Anspruch 1, **gekennzeichnet durch**
Ermitteln der Verbindungsrelevanten Informationen von der ersten SIM-Karte.

3. Verfahren gemäß Anspruch 2, **dadurch gekennzeichnet, dass** die Verbindungsrelevanten Informationen eine der ersten SIM-Karte zugeordneten Rufnummer umfassen.

4. Verfahren gemäß einem der vorhergehenden Ansprüche, **gekennzeichnet durch** Ermitteln der verbindungsrelevanten Informationen von der dem zumindest einen der weiteren Provider zugeordneten SIM-Karte.

5. Verfahren gemäß Anspruch 4, **dadurch gekennzeichnet, dass** die verbindungsrelevanten Informationen eine der dem zumindest einen der weiteren Provider zugeordneten SIM-Karte zugeordneten Rufnummer und eine dem zumindest einen der weiteren Provider zugeordnete Rufnummer umfassen.

6. Verfahren gemäß einem der vorhergehenden Ansprüche, **gekennzeichnet durch** Übertragen der verbindungsrelevanten Informationen mittels des Netzes, in dem die Kommunikationsanordnung eingebucht ist.

7. Verfahren gemäß einem der vorhergehenden Ansprüche, **dadurch gekennzeichnet, dass** der zumindest einen der weiteren Provider seine Dienste über das Netz bereitstellt, in dem die Kommunikationsanordnung eingebucht ist.

8. Verfahren gemäß einem der vorhergehenden Ansprüche, **dadurch gekennzeichnet, dass** die zumindest zwei SIM-Karten eine Haupt-SIM-Karte und eine Neben-SIM-Karte umfassen und die Übertragung der verbindungsrelevanten Informationen erfolgt, sobald die Kommunikationsanordnung mittels der Haupt-SIM-Karte in das Netz eingebucht wird.

9. Verfahren gemäß Anspruch 8, **dadurch gekennzeichnet, dass** die Kommunikationsanordnung mittels der Neben-SIM-Karte eingebucht wird, wenn die Haupt-SIM-Karte nicht durch die Kommunikationsanordnung verfügbar ist.

10. Kommunikationsanordnung, die einen Transceiver (12) aufweist und mit zumindest zwei SIM-Karten (15.1, 15.2) betreibbar ist, wobei die Kommunikationsanordnung mittels einer ersten SIM-Karte (15.1), die einem ersten Provider zugeordnet ist, in ein Netz einbuchtbar ist und die weiteren SIM-Karten (15.2) weiteren Providern zugeordnet sind,
***dadurch gekennzeichnet dass***
die Kommunikationsanordnung eingerichtet ist, verbindungsrelevanten Informationen der SIM-Karten (15.1, 15.2) an zumindest einen der weiteren Provider zu übertragen, wobei **dadurch** Dienste, die von dem zumindest einen der weiteren Provider angeboten werden, der mittels der ersten SIM-Karte (15.1) eingebuchten Kommunikationsanordnung verfügbar gemacht werden.

11. Kommunikationsanordnung gemäß Anspruch 10, **dadurch gekennzeichnet, dass** die Kommunikationsanordnung eingerichtet ist, die verbindungsrelevanten Informationen von der ersten SIM-Karte zu ermitteln.

12. Kommunikationsanordnung gemäß Anspruch 11, **dadurch gekennzeichnet, dass** die verbindungsrelevanten Informationen eine der ersten SIM-Karte zugeordneten Rufnummer umfassen.

13. Kommunikationsanordnung gemäß einem der Ansprüche 10 bis 12, **dadurch gekennzeichnet, dass** die Kommunikationsanordnung eingerichtet ist, die verbindungsrelevanten Informationen von der dem zumindest einen der weiteren Provider zugeordneten SIM-Karte zu ermitteln.

14. Kommunikationsanordnung gemäß Anspruch 13, **dadurch gekennzeichnet, dass** die verbindungsrelevanten Informationen eine der dem zumindest einen der weiteren Provider zugeordneten SIM-Karte zugeordneten Rufnummer und eine dem zumindest einen der weiteren Provider zugeordnete Rufnummer umfassen.

15. Kommunikationsanordnung gemäß einem der Ansprüche 10 bis 14, **dadurch gekennzeichnet, dass** die Kommunikationsanordnung eingerichtet ist, die verbindungsrelevanten Informationen mittels des Netzes zu übertragen, in dem die Kommunikationsanordnung eingebucht ist.

16. Kommunikationsanordnung gemäß einem der Ansprüche 10 bis 15, **dadurch gekennzeichnet, dass** der zumindest einen der weiteren Provider seine Dienste über das Netz bereitstellt, in dem die Kommunikationsanordnung eingebucht ist.

17. Kommunikationsanordnung gemäß einem der Ansprüche 10 bis 16, **dadurch gekennzeichnet, dass** die zumindest zwei SIM-Karten eine Haupt-SIM-Karte und eine Neben-SIM-Karte umfassen und die Kommunikationsanordnung eingerichtet ist, die verbindungsrelevanten Informationen zu übertragen, sobald die Kommunikationsanordnung mittels der Haupt-SIM-Karte in das Netz eingebucht ist.

18. Kommunikationsanordnung gemäß Anspruch 17, **dadurch gekennzeichnet, dass** die Kommunikationsanordnung die Neben-SIM-Karte zum Einbuchen zu verwenden, wenn die Haupt-SIM-Karte nicht durch die Kommunikationsanordnung verfügbar ist.

## Claims

1. A method for operating a communication device which comprises a transceiver (12) and can be operated with at least two SIM cards (15.1, 15.2), whereby the communication device is logged into a network by means of a first SIM card (15.1) which is assigned to a first provider, and the other SIM cards (15.2) are assigned to other providers,
**characterised by** the transmission of connection-relevant information of the SIM cards (15.1, 15.2) to at least one of the other providers, whereby services which are offered by the at least one of the other providers are thereby made available for the communication device logged in by means of the first SIM card (15.1).

2. A method according to Claim 1,
**characterised by** the determination of the connection-relevant information of the first SIM card.

3. A method according to Claim 2,
**characterised in that** the connection-relevant information comprises a call number assigned to the first SIM card.

4. A method according to one of the preceding Claims,
**characterised by** the determination of the connection-relevant information of the SIM card assigned to the at least one of the other providers.

5. A method according to Claim 4,
**characterised in that** the connection-relevant information comprises a call number assigned to the SIM card that is assigned to the at least one of the other providers and a call number assigned to the at least one of the other providers.

6. A method according to one of the preceding Claims,
**characterised by** the transmission of the connection-relevant information by means of the network into which the communication device is logged.

7. A method according to one of the preceding Claims,
**characterised in that** the at least one of the other providers provides its services over the network into which the communication device is logged.

8. A method according to one of the preceding Claims,
**characterised in that** the at least two SIM cards comprise a main SIM card and an auxiliary SIM card and the transmission of the connection-relevant information takes place as soon as the communication device is logged into the network by means of the main SIM card.

9. A method according to Claim 8,
**characterised in that** the communication device is logged in by means of the auxiliary SIM card when the main SIM card is not available to the communication device.

10. A communication device, which comprises a transceiver (12) and can be operated by at least two SIM cards (15.1, 15.2), where the communication device can be logged into a network by means of a first SIM card (15.1) which is assigned to a first provider and the other SIM cards (15.2) are assigned to other providers,
**characterised in that** the communication device is set up to transmit connection-relevant information of the SIM cards (15.1, 15.2) to at least one of the other providers, where services which are offered by the at least one of the other providers are thereby made available to the communication device logged in by means of the first SIM card (15.1).

11. A communication device according to Claim 10,
**characterised in that** the communication device is set up to determine the connection-relevant information of the first SIM card.

12. A communication device according to Claim 11,
**characterised in that** the connection-relevant information comprises a call number assigned to the first SIM card.

13. A communication device according to one of Claims 10 to 12,
**characterised in that** the communication device is set up to determine the connection-relevant information of the SIM card assigned to the at least one of the other providers.

14. A communication device according to Claim 13,
**characterised in that** the connection-relevant information comprises a call number assigned to the SIM card that is assigned to the at least one of the other providers and a call number assigned to the at least one of the other providers.

15. A communication device according to one of Claims 10 to 14,
**characterised in that** the communication device is set up to transmit the connection-relevant information by means of the network into which the communication device is logged.

16. A communication device according to one of Claims 10 to 15,
**characterised in that** the at least one of the other providers provides its services over the network into which the communication device is logged.

17. A communication device according to one of Claims 10 to 16,
**characterised in that** the at least two SIM cards comprise a main SIM card and an auxiliary SIM card and the communication device is set up to transmit the connection-relevant information as soon as the communication device is logged into the network by means by the main SIM card.

18. A communication device according to Claim 17,
**characterised in that** the communication device uses the auxiliary SIM card for logging in when the main SIM card is not available to the communication device.

## Revendications

1. Procédé de fonctionnement d'un dispositif de communication, présentant un émetteur-récepteur (12) et pouvant fonctionner avec au moins deux cartes SIM (15.1, 15.2), le dispositif de communication étant intégré dans un réseau au moyen d'une première carte SIM (15.1) associée à un fournisseur de services, et les autres cartes SIM (15.2) étant associées à d'autres fournisseurs de services,
**caractérisé par**
la transmission d'informations, concernant la liaison, des cartes SIM (15.1, 15.2) à au moins l'un des autres fournisseurs de services, sachant que, de ce fait, des services, offerts par le au moins un autre fournisseur de services, sont rendus disponibles au dispositif de communication intégré au moyen de la première carte SIM (15.1).

2. Procédé selon la revendication 1, **caractérisé par** la détermination des informations, concernant la liaison, depuis la première carte SIM.

3. Procédé selon la revendication 2, **caractérisé en ce que** les informations concernant la liaison comprennent un numéro d'appel associé à la première carte SIM.

4. Procédé selon l'une des revendications précédentes, **caractérisé par** la détermination des informations concernant la liaison, par la carte SIM associée au au moins un autre fournisseur de services.

5. Procédé selon la revendication 4, **caractérisé en ce que** les informations concernant la liaison comprennent un numéro d'appel, associé à la carte SIM associée au au moins un autre fournisseur de services, et un numéro d'appel, associé au au moins un autre fournisseur de services.

6. Procédé selon l'une des revendications précédentes, **caractérisé par** une transmission des informations concernant la liaison, au moyen du réseau dans lequel le dispositif de communication est intégré.

7. Procédé selon l'une des revendications précédentes, **caractérisé en ce que** le au moins un des autres fournisseurs de services fournit ses services par le réseau dans lequel le dispositif de communication est intégré.

8. Dispositif selon l'une des revendications précédentes, **caractérisé en ce que** les au moins deux cartes SIM comprennent une carte SIM principale et une carte SIM annexe, et la transmission des informations concernant la liaison s'effectue dès que le dispositif de communication est intégré dans le réseau à l'aide de la carte SIM principale.

9. Procédé selon la revendication 8, **caractérisé en ce que** le dispositif de communication est intégré au moyen de la carte SIM annexe, lorsque la carte SIM principale n'est pas disponible de par le dispositif de communication.

10. Dispositif de communication, présentant un émetteur-récepteur (12) et pouvant fonctionner avec au moins deux cartes SIM (15.1, 15.2), le dispositif de communication étant susceptible d'être intégré dans un réseau, au moyen d'une première carte SIM (15.1) associée à un premier fournisseur de services, et les autres cartes SIM (15.2) étant associées à d'autres fournisseurs de services,
**caractérisé en ce que**
le dispositif de communication est agencé pour transmettre des informations, concernant la liaison, des cartes SIM (15.1, 15.2) à au moins l'un des autres fournisseurs de services, sachant que, de ce fait, des services, offerts par le au moins un des autres fournisseurs de services, sont rendus disponibles au dispositif de communication intégré à l'aide de la première carte SIM (15.1).

11. Dispositif de communication selon la revendication 10, **caractérisé en ce que** le dispositif de communication est agencé pour faire déterminer les informations, concernant la liaison, par la première carte SIM.

12. Dispositif de communication selon la revendication 11, **caractérisé en ce que** les informations, concernant la liaison, comprennent un numéro d'appel associé à la première carte SIM.

13. Dispositif de communication selon l'une des revendications 10 à 12, **caractérisé en ce que** le dispositif de communication est agencé pour faire déterminer les informations, concernant la liaison, par la carte SIM associée au au moins un des autres fournisseurs de services.

14. Dispositif de communication selon la revendication 13, **caractérisé en ce que** les informations concernant la liaison comprennent un numéro d'appel, associé à la carte SIM associée au au moins un des autres fournisseurs de services, et un numéro d'appel, associé au au moins l'un des autres fournisseurs de services.

15. Dispositif de communication selon l'une des revendications 10 à 14, **caractérisé en ce que** le dispositif de communication est agencé pour transmettre les informations, concernant la liaison, au moyen du réseau dans lequel le dispositif de communication est intégré.

16. Dispositif de communication selon l'une des revendications 10 à 15, **caractérisé en ce que** le au moins un des autres fournisseurs de services fournit ses services par le réseau dans lequel le dispositif de communication est intégré.

17. Dispositif de communication selon l'une des revendications 10 à 16, **caractérisé en ce que** les au moins deux cartes SIM comprennent une carte SIM principale et une carte SIM annexe, et le dispositif de communication est agencé pour transmettre les informations concernant la liaison, dès que le dispositif de communication est intégré dans le réseau à l'aide de la carte SIM principale.

18. Dispositif de communication selon la revendication 17, **caractérisé en ce que** le dispositif de communication utilise la carte SIM annexe pour l'intégration, lorsque la carte SIM principale n'est pas rendue disponible par le dispositif de communication.
